# EUROPÄISCHE PATENTSCHRIFT

(11) **EP 0 674 201 B1**
(45) Veröffentlichungstag und Bekanntmachung des Hinweises auf die Patenterteilung: **16.06.1999**
(21) Anmeldenummer: 95103928.8
(22) Anmeldetag: 17.03.1995
(51) Int. Cl.: G02B 21/34

(54) **Objektträger zur mikroskopischen Auswertung flüssiger Proben**
Slide for microscopic processing of fluid samples
Porte-objets pour l'évaluation d'échantillons fluides

(30) Priorität: 22.03.1994 DE 4409786
(43) Veröffentlichungstag der Anmeldung: 27.09.1995
(73) Patentinhaber: Roche Diagnostics GmbH, 68298 Mannheim (DE)
(72) Erfinder: Simon, Thomas, D-64625 Bensheim (DE); Kaiser, Ingo, D-68259 Mannheim (DE); Carstensen, Carsten, D-67259 Heuchelheim (DE)

(56) Entgegenhaltungen:
- EP-A- 0 210 071
- DE-A- 2 721 345
- US-A- 4 299 441

## Beschreibung

Die Erfindung betrifft einen Objektträger zur mikroskopischen Auswertung flüssiger Proben, beinhaltend eine Grundplatte mit mindestens einer Auswertekammer und mindestens zwei Abstandshaltern, wobei die mindestens eine Auswertekammer eine Auswerteebene besitzt und sich an eine Kante dieser Ebene eine Probenaufgabefläche anschließt, die gegenüber der Auswerteebene geneigt ist und die mindestens zwei Abstandshalter an gegenüberliegenden Kanten der durch Auswerteebene und Probenaufgabefläche gebildeten Fläche angeordnet sind, weiterhin eine Deckfolie, die mit den Abstandshaltern fest verbunden ist, so daß die Deckfolie parallel zu der Auswerteebene der mindestens einen Auswertekammer angeordnet ist und zwischen Deckfolie und Auswerteebene ein Kapillarspalt ausgebildet wird.

Erfindungsgemäße Objektträger können zur automatischen, mikroskopischen Auswertung von Probeflüssigkeiten verwendet werden. Solche Probeflüssigkeiten sind zum Beispiel, Urin, Blut, Speichel, Gewebeflüssigkeit und Gelenkflüssigkeit. Die Auswertung genannter Proben wird durchgeführt, um die Zahl von in der Probe vorhandenen Zellen zu bestimmen und/oder aufgrund der Zellmorphologie zu ermitteln, welche Zelltypen zugegen sind. Mit den Objektträgern ist sowohl eine manuelle, als auch eine maschinelle Auswertung möglich. Die Vorteile der Erfindung treten jedoch besonders hervor, wenn die Auswertung maschinell erfolgt.

Im Stand der Technik sind Objektträger zur mikroskopischen Auswertung flüssiger Proben bekannt, die aus einem Ober- und einem Unterteil zusammengesetzt werden. EP-A 0210071 beschreibt beispielsweise einen solchen Objektträger, bei dem die Auswertekammern durch das Zusammenfügen zweier Spritzgußteile entstehen. Zwischen Ober- und Unterteil befinden sich Abstandshalter, die eine konstante Dicke eines Kapillarspaltes sicherstellen. Ober- und Unterteil sind durch das Spritzgußverfahren gefertigt. Die Dicke des Kapillarspaltes wird mit 10 µm als vorteilhaft herausgestellt, da dies etwa einer einzelnen Fokusebene eines Mikroskops entspricht. Über die Dicke der Deckplatte der Auswertekammer wird keine Aussage getroffen. Zum Entweichen von Luft, die durch Probeflüssigkeit eingeschlossen wird, werden für jede Untersuchungskammer zwei Bohrungen vorgeschlagen, die auf einem Halbkreis gelegen sind, der den Probenraum begrenzt.

Im Stand der Technik ist weiterhin das Dokument U.S. 4,299,441 bekannt, das ebenfalls Objektträger beschreibt, die aus Spritzgußteilen gefertigt werden. Die Dicke der Auswertekammerwände wird mit 0,013 ± 0,002 Inch (d. h. 0,325 ± 0,05 mm) angegeben. Wie auch im erstgenannten Stand der Technik besitzt die Grundfläche der Probenkammer im wesentlichen die Form eines Halbkreises.

Die im Stand der Technik beschriebenen Objektträger weisen den Nachteil auf, daß als Deckplatte ein Spritzgußteil verwendet wird. Spritzgußteile können in der Regel nicht mit geringen Dicken und ohne optische Inhomogenitäten gefertigt werden. Ein weiterer Nachteil bekannter Objektträger besteht darin, daß die Kapillarspaltdicken so klein sind, daß Stauungen des Kapillarflusses durch Zellanhäufungen auftreten können. Weiterhin besitzen bekannte Objektträger eine so kleine Auswertefläche, daß Zellzählungen mit einem großen statistischen Fehler behaftet sind.

Aufgabe der Erfindung war es, Objektträger zur Verfügung zu stellen, die eine mikroskopische Auswertung von Probeflüssigkeiten vereinfachen, sie präziser machen und die Zählung von Teilchen ermöglichen. Es war ebenfalls Aufgabe der Erfindung die Fertigung präziser Objektträger zu vereinfachen. Die oben genannten Aufgaben werden durch die Merkmale der Ansprüche 1 bzw. 17 gelöst.

Objektträger der vorliegenden Erfindung besitzen eine Grundplatte und eine Folie, die mit der Grundplatte über Abstandshalter fest verbunden ist.

Die Grundplatte des Objektträgers besitzt in der Regel die Gestalt einer rechteckigen, wenige Millimeter dicken Platte. Die Grundplatte kann vorteilhaft als Spritzgußteil aus Kunststoff gefertigt werden. In die Grundplatte integriert sind eine oder mehrere Auswertekammern. Zumindest der Bereich der Grundplatte, der die Auswertekammern beinhaltet, ist transparent. Als Materialien für den Grundkörper sind demnach Polycarbonate, Polyacryl, Polyacrylmetacrylat, Cellulosepropionat und weitere Kunststoffe geeignet, die im Spritzgußverfähren verwendet werden können und unter geeigneten Bedingungen zu lichtdurchlässigen Spritzgußteilen formbar sind.

Die Auswertekammern besitzen eine Auswerteebene, die parallel zur Ebene der Grundplatte verläuft. An die Auswerteebene schließt sich eine Probenaufgabefläche an, die gegenüber der Auswerteebene geneigt ist. Zur mikroskopischen Auswertung ist es notwendig, daß die Auswerteebene plan ist und keine Unebenheiten aufweist. Die Auswerteebene besitzt bevorzugt eine Breite von mehreren Millimetern und eine Länge von über 1 cm.

An die Auswerteebene schließt sich eine Probenaufgabefläche an, die gegenüber der Auswerteebene geneigt ist. Die Probenaufgabefläche kann planar sein, bevorzugt weist die Probenaufgabefläche jedoch eine Krümmung auf. Als vorteilhaft hat es sich erwiesen, wenn die Krümmung so gewählt wird, daß die Kante, die durch Zusammentreffen von Auswerteebene und Probenaufgabefläche entsteht, gekrümmt ist.

Zur Auswertekammer gehören weiterhin Abstandshalter, die an gegenüberliegenden Kanten der durch Auswerteebene und Probenaufgabefläche gebildeten Fläche angeordnet sind. Befinden sich mehrere Auswertekammern auf der Grundplatte, so werden diese durch die Abstandshalter voneinander getrennt, so daß Probeflüssigkeit für eine Auswertekammer nicht in eine benachbarte Kammer eindringen kann. Durch die Abstandshalter und Teile der Grundplatte, welche die Auswertekammern umgeben, wird oberhalb der Probenaufgabefläche eine Vertiefung gebildet, die als Probenaufgaberaum dient.

Die Abstandshalter sind Stege, die auf der Oberseite des Grundkörpers angeordnet sind. An ihrer Oberkante, d. h. an der Kante, die dem Grundkörper abgewandt ist, laufen sie bevorzugt spitz zu. Diese Verjüngung der Abstandshalter an der Oberkante ist wichtig, da es ein Verschweißen von Abstandshalter und Deckfolie ermöglicht, ohne die Deckfolie durchzuschmelzen. Bei einer bevorzugten Ausführungsform der Abstandshalter weisen diese in dem mit der Grundplatte verbundenen Bereich eine Dicke von einigen zehntel Millimetern auf. An diesen Bereich schließt sich ein dachförmiger Teil an, dessen Spitze einen Krümmungsradius von einigen hundertstel Millimeter besitzt.

Es ist ebenfalls vorteilhaft, wenn die Abstandshalter von der Unterseite der Grundplatte zugänglich sind. Bei dieser Ausführungsform wird der Abstandshalter mit im wesentlichen gleichbleibender Dicke auf der Unterseite der Grundplatte fortgesetzt. Dies ermöglicht eine Ankopplung von Ultraschall über Sonotroden an die Abstandshalter. Die Ultraschallenergie wird durch den Abstandshalter übertragen und konzentriert sich in seiner Spitze, an der die Verschweißung von Abstandshalter und Folie erfolgt. Aufgrund dieser Funktionsweise werden die Abstandshalter auch als Energierichtungsgeber bezeichnet.

Die Funktionsweise des Objektträgers wird ebenfalls dadurch verbessert, daß sich zwischen Auswerteebene und Abstandshalter eine Vertiefung befindet. Diese Vertiefung, die auch als Rinne bezeichnet wird, dient zum Abführen von Luft aus dem durch Grundkörper und Deckfolie gebildeten Kapillarspalt, wenn Flüssigkeit in den Kapillarspalt eindringt. Die Vertiefung besitzt bevorzugt den Querschnitt eines V' s. Sowohl ihre größte Breite als auch Tiefe betragen vorteihaft etwa 1 mm.

An die der Probenaufgabefläche abgewandte Kante der Auswerteebene kann sich ein Reservoir anschließen, das zur Aufnahme überschüssiger Flüssigkeit dient. Die Reservoirs benachbarter Auswertekammern sind durch die Abstandshalter voneinander getrennt.

Auf der Grundplatte können sich weiterhin Führungselemente zur Bewegung des Objektträgers durch ein automatisches Gerät befinden. Außerhalb des Bereiches der Auswertekammern kann beispielsweise ein angerauhter Bereich vorliegen, mit dem der Objektträger durch ein Reibrad bewegt werden kann. Es ist ferner möglich, daß sich eine Zahnstange auf dem Objektträger befindet, in die ein Zahnrad eines Auswertegerätes eingreift. Bei einer Fertigung der Grundplatte nach dem Spritzgußverfahren können die genannten Transportvorrichtungen (angerauhter Bereich, Zahnstange) direkt im Herstellungsverfahren mit eingebracht werden, so daß sich eine einteilige Ausführungsform der Grundplatte ergibt.

In der Grundplatte können sich weiterhin Bohrungen befinden, die zur Positionierung und/oder Halterung der Deckfolie dienen. Diese Bohrungen befinden sich ebenfalls außerhalb des Bereiches der Auswertekammern.

Zur Befestigung der Deckfolie auf dem Grundkörper wird diese über die Stege gelegt und durch Maschinenelemente, die in die Bohrungen der Grundplatte eingreifen, gehaltert.

Als Deckfolie für den Objektträger werden transparente Kunststoff-Folien verwendet. Bevorzugt sind Material der Deckfolie und Material der Grundplatte identisch. Auf diese Weise kann eine besonders haltbare Verschweißung von Deckfolie und Grundkörper erreicht werden, da die Materialien gleiche Erweichungstemperaturen und gleiche thermische Ausdehnungskoeffizienten besitzen. Prinzipiell sind als Folienmaterial die gleichen Materialien wie für den Grundkörper geeignet. Insbesondere das bei der Firma Röhm unter der Bezeichnung "Plexiglasfolie 530 K" geführte Produkt ist als Deckfolie geeignet.

Ein zentraler Punkt der Erfindung ist es, daß zur Abdeckung der Probenkammern eine Folie verwendet wird statt der aus dem Stand der Technik bekannten Spritzgußteile. Folien können zum einen sehr dünn und mit gleichbleibender Dicke gefertigt werden. Folienmaterialien unter 0,2 mm Dicke, insbesondere mit 0,15 mm Dicke, besitzen den Vorteil, daß herkömmliche Mikroskopobjektive auf diese Dicke korrigiert sind. Allgemein wird eine Verbesserung der optischen Auswertung erreicht, wenn die Dicke der Deckfolie gesenkt wird. Da jedoch eine gewisse mechanische Stabilität benötigt wird, kann die Dicke der Deckfolie nicht beliebig verringert werden. Folien weisen gegenüber Spritzgußteilen weiterhin den Vorteil auf, daß bei ihrer Herstellung optische Inhomogenitäten leichter vermieden werden können.

Eine Deckfolie für den erfindungsgemäßen Objektträger erstreckt sich über die auf dem Objektträger vorhandenen Auswertekammern. Bevorzugt ragt die Deckfolie auf der der Probenaufgabefläche zugewandten Seite über die Linie hinaus, an der Auswerteebene und Probenaufgabefläche zusammentreffen. An der Seite, die dem Reservoir zur Aufnahme von überschüssiger Flüssigkeit zugewandt ist, ragt die Deckfolie über das Ende der Auswerteebene hinaus, verschließt jedoch nicht das Reservoir.

Durch das Aufbringen der Deckfolie auf den Objektträger entsteht zwischen Auswerteebene und Deckfolie ein Kapillarspalt. Der Kapillarspalt ist sowohl in Richtung der Probenaufgabefläche geöffnet als auch in Richtung auf das Reservoir. Erfindungsgemäß hat sich ergeben, daß Kapillarspalte von 30 bis 120 um, bevorzugt von 60 bis 90 um, besonders gut zur optischen Untersuchung von Urin geeignet sind. Werden Dicken unter 30 um gewählt, so bilden sich beim Einströmen der zu untersuchenden Flüssigkeit in den Kapillarspalt Anhäufungen von Zellen, die eine gleichmäßige Verteilung des Zellmaterials auf den gesamten Kapillarspalt verhindern.

Eine mikroskopische Fokusebene umfaßt etwa 10 µm. Erfindungsgemäße Objektträger, die ein Vielfaches der Dicke einer Fokusebene umfassen, werden daher bevorzugt durch ein Mikroskop mit automatischer Fokussierung ausgewertet, da eine manuelle Auswertung nur unter großem Aufwand möglich ist. Durch eine erfindungsgemäß bevorzugte Länge des Kapillarspaltes von über 1 cm wird eine relativ große Auswerteebene zur Verfügung gestellt, mit der eine höhere Genauigkeit der Zellzählung erreicht werden kann als dies mit kleineren Auswerteebenen der Fall ist. Die Verwendung dieser gegenüber dem Stand der Technik vergrößerten Auswertefläche ist möglich, da aufgrund der ebenfalls größeren Schichtdicke des Kapillarspaltes keine Stauungen des Flüssigkeitstransfers, z. B. durch Zellanhäufungen, auftreten.

Die für den Objektträger verwendete Deckfolie kann ebenfalls auf der dem Kapillarspalt zugewandten Seite mit einem Farbstoff versehen sein, der sich in der Probeflüssigkeit löst und dazu dient, in der Probeflüssigkeit enthaltene Zellen anzufärben.

Es können erfindungsgemäß auch chemische Reagenzien eingesetzt werden, die mit dem Zellmaterial in der Probeflüssigkeit reagieren oder zu einer Anfärbung führen.

Zu der Erfindung gehört ebenfalls ein Verfahren zur Fertigung eines Objektträgers aus einem Grundköiper mit mindestens einer Auswertekammer und mindestens zwei Abstandshaltern und einer Deckfolie, dadurch gekennzeichnet, daß die Deckfolie auf die mindestens zwei Abstandshalter aufgedrückt wird und Grundkörper und Deckfolie durch Ultraschall miteinander verschweißt werden.

Für das Fertigungsverfahren werden Grundkörper und Deckfolien verwendet, die bereits beschrieben wurden. Die Deckfolie wird entweder maschinell auf die Abstandshalter aufgedrückt oder auf sie aufgelegt. Zum Positionieren und auch zum Haltern der Deckfolie auf dem Grundkörper können vorteilhaft die bereits erwähnten Bohrungen im Grundkörper verwendet werden. Das Verschweißen von Grundkörper und Deckfolie erfolgt mit Ultraschall. Bevorzugt kann der Ultraschall von der Unterseite des Grundkörpers an die Abstandshalter angekoppelt werden. Der Verschweißungsprozeß wird so gesteuert, daß lediglich die Spitzen der Abstandshalter anschmelzen, die Deckfolie jedoch nur an der Kontaktfläche anschmilzt ohne durchzuschmelzen.

Mit den Maschinenteilen, die Deckfolie und Grundkörper während des Verschmelzungsprozesses aneinanderdrücken, ist eine genaue Kontrolle des Abstandes zwischen Grundkörper und Deckfolie möglich. Dadurch, daß die Abstandshalter nach oben hin spitz zulaufen, kann der Schmelzvorgang so gesteuert werden, daß eine genau definierte Dicke des Kapillarspaltes resultiert.

Der fertige Objektträger kann zur mikroskopischen Untersuchung einer flüssigen Probe verwendet werden. Ein Tropfen zu untersuchender Flüssigkeit wird auf die Probeaufgabefläche gegeben. Die Menge der Probe muß so bemessen sein, daß der Teil der Probenaufgabefläche, der sich unterhalb der Deckfolie befindet, von Flüssigkeit benetzt wird. Die Flüssigkeit wird in diesem Fall durch Kapillarkräfte in den Kapillarspalt hineingezogen. Zur Auswertung der Probe wird der Kapillarspalt von der Unterseite des Objektträgers beleuchtet und der Kapillarspaltinhalt von der Oberseite des Objektträgers mit einem Mikroskop abgebildet.

Der Vorteil erfindungsgemäßer Objektträger liegt gemäß der obigen Beschreibung darin, daß ihre Fertigung relativ einfach möglich ist und zu einer Vorrichtung führt, mit der sowohl Zellzählung als auch Bestimmung der Zellmorphologie. möglich sind. Die Objektträger können aufgrund der geringen Dicke der Deckfolie mit konventionellen Objektiven ausgewertet werden.

Die Beschreibung der Erfindung wird durch das folgende Beispiel näher spezifiziert.
- Figur 1:: Aufsicht auf einen Objektträger
- Figur 2a:: Querschnitt durch einen Objektträger
- Figur 2b:: Ausschnittsvergrößerung von Figur 2a

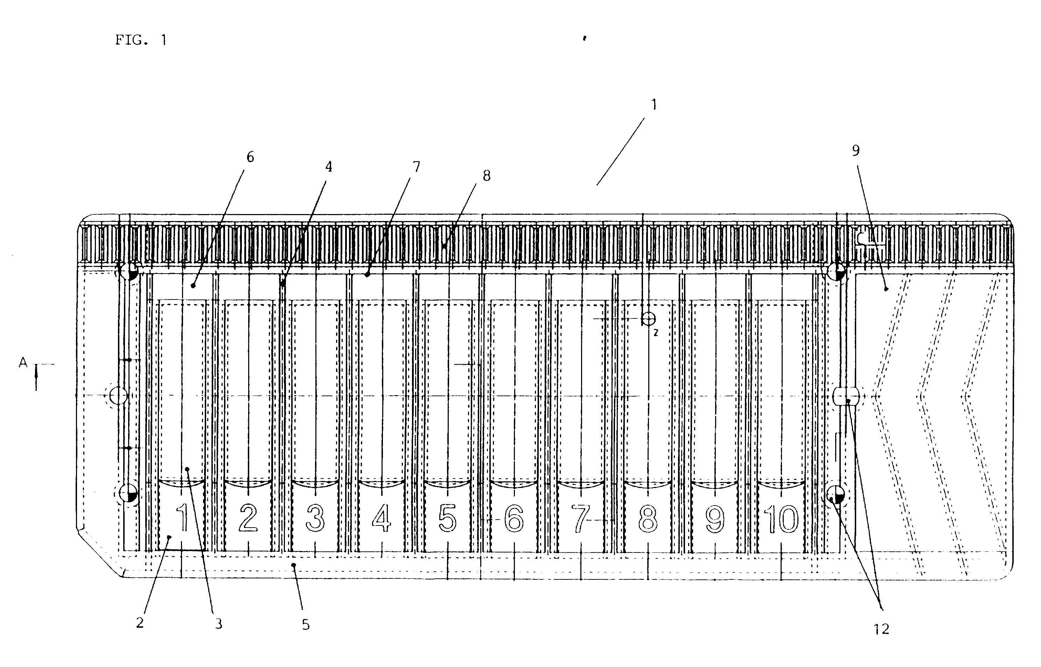

Figur 1 zeigt eine Aufsicht auf einen erfindungsgemäßen Objektträger (1) mit 10 Auswertekammern. Jede der Auswertekammern besitzt eine Probenaufgabefläche (2) und eine Auswerteebene (3). Einzelne Auswertekammern sind durch die Abstandshalter (4) voneinander getrennt. Die Probenaufgabeflächen (2) besitzen eine Krümmung, während die Auswerteebenen (3) planar sind. Figur 1 zeigt eine einteilige Ausführungsform eines Objektträgerunterteiles, d. h. die Umrandung (5) und der Bereich der Auswertekammern wurde aus einem Stück gefertigt. Die Auswerteebene (3) ist gegenüber der Ebene der Umrandung (5) in der Höhe versetzt, während sich die Oberkanten der Abstandshalter (4) im wesentlichen auf einer Höhe mit der Umrandung (5) befinden.

Figur 1 zeigt ebenfalls für jede Auswertekammer ein Reservoir (6) zur Aufnahme überschüssiger Probenflüssigkeit. Aus der Zeichnung geht hervor, daß die Deckfolie (7) (durchgezogene Linie) über die Auswerteebene (3) (gestrichelt eingezeichnet), sowohl an der dem Reservoir zugewandten Seite als auch an der der Probenaufgabefläche zugewandten Seite, hinausragt. Zur Halterung der Deckfolie (7) während der Ultraschall-Verschweißung mit dem Grundkörper dienen die Bohrungen (12).

Integraler Bestandteil des Objektträgers (1) ist ebenfalls die Zahnstange (8), die in einem Seitenteil der Umrandung angebracht ist. Die Umrandung besitzt außerdem einen Bereich, der als Halter (9) für einen Benutzer dient.

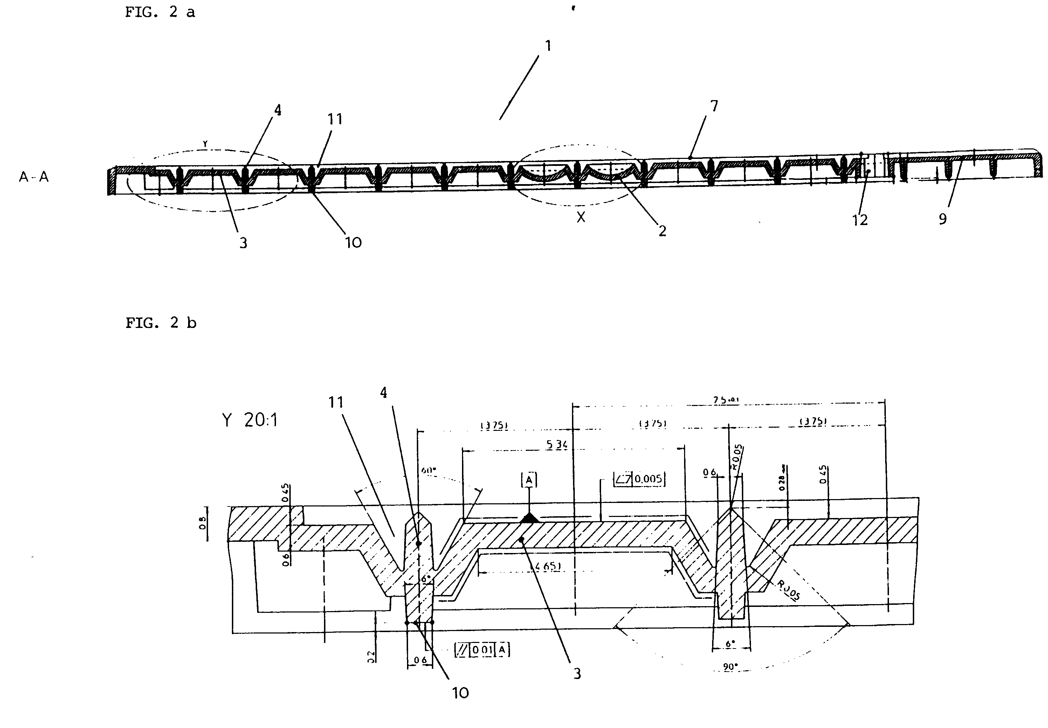

Figur 2a zeigt den in Figur 1 dargestellten Probenträger entlang der Schnittlinie A. Der mit X gekennzeichnete Bereich zeigt einen Querschnitt auf Höhe der Probenaufgabeflächen (2). Der Bereich Y stellt einen Querschnitt in Höhe der Auswerteebenen (3) dar. Aus Figur 2 ist zu erkennen, in welche Richtung die Probenaufgabeflächen (2) gekrümmt sind. Es ist ebenfalls die Form der Abstandshalter (4) zu erkennen. An der Unterseite des Grundkörpers besitzen die Abstandshalter Ankopplungsflächen (10) für Sonotroden. An der der Deckfolie (7) zugewandten Seite laufen die Abstandshalter (4) spitz zu. Zwischen Abstandshalter (4) und Auswerteebene (3) befindet sich eine Rinne (11) zur Abführung verdrängter Luft aus dem Kapillarspalt.

Figur 2b ist eine Ausschnittsvergrößerung des Bereiches y in Figur 2a. Insbesondere ist in dieser Figur die dachartige Form des Abstandshalters (4) zu erkennen.

## Patentansprüche

1. Objektträger (1) zur mikroskopischen Auswertung flüssiger Proben, beinhaltend
- eine Grundplatte mit mindestens einer Auswertekammer und mindestens zwei Abstandshaltern (4),
wobei die mindestens eine Auswertekammer eine Auswerteebene (3) besitzt und sich an eine Kante dieser Ebene eine Probenaufgabefläche (2) anschließt, die gegenüber der Auswerteebene (3) geneigt ist und
die mindestens zwei Abstandshalter (4) an gegenüberliegenden Kanten der durch Auswerteebene (3) und Probenaufgabefläche (2) gebildeten Fläche angeordnet sind,
- gekennzeichnet durch eine Deckfolie (7), die mit den Abstandshaltern (4) fest verbunden ist, so daß die Deckfolie (7) parallel zu der Auswerteebene (3) der mindestens einen Auswertekammer angeordnet ist und zwischen Deckfolie (7) und Auswerteebene (4) ein Kapillarspalt ausgebildet wird,
wobei die Kanten der Abstandshalter (4), die mit der Deckfolie (7) verbunden sind, spitz zulaufen.

2. Objektträger gemäß Anspruch 1, bei dem die der Deckfolie (7) abgewandte Kante der Abstandshalter (4) Ankopplungsflächen (10) besitzt, die von der Unterseite der Grundplatte zugänglich sind und durch die eine Ankopplung von Ultraschall an die Abstandshalter (4) erfolgen kann.

3. Objektträger gemäß einem der Anspruch 1 oder 2, bei dem Grundplatte und Deckfolile (7) durch Ultraschall-Verschweißung verbunden sind.

4. Objektträger gemäß Anspruch 1, bei dem sich in der Grundplatte außerhalb der mindestens einen Auswertekammer Bohrungen (12) befinden, so daß die Deckfolie (7) während des Vorgangs der Verbindung von Grundkörper und Deckfolie (7) durch Einführen von Werkzeugen in diese Bohrungen (12) auf die Grundplatte gehaltert werden kann.

5. Objektträger gemäß Anspruch 1, bei dem sich zwischen der Auswerteebene (3) und den mindestens zwei Abstandshaltern (4) jeweils eine V-förmige Rinne (11) befindet.

6. Objektträger gemäß Anspruch 1, bei dem die Probenaufgabefläche (2) gebogen ist und sich die Verbindungslinie von Auswerteebene (3) und Probenaufgabefläche (2) unterhalb der Deckfolie (7) befindet.

7. Objektträger gemäß Anspruch 1, bei dem der Kapillarspalt an dem der Probenaufgabefläche (2) abgewandten Ende des Kapillarspaltes offen ist.

8. Objektträger gemäß Anspruch 7, bei dem sich an die genannte Öffnung des Kapillarspaltes ein Reservoir (6) anschließt.

9. Objektträger gemäß Anspruch 1, bei dem der Kapillarspalt eine Dicke von 30 bis 120 µm, bevorzugt von 60 bis 90 µm besitzt.

10. Objektträger gemäß Anspurch 1, bei dem die Deckfolie (7) eine Dicke von weniger als 0,2 mm besitzt.

11. Objektträger gemäß Anspruch 1, bei dem der Kapillarspalt länger als 1 cm ist.

12. Objektträger gemäß Anspruch 1, der eine Zahnstange (8) zur Bewegung des Objektträgers innerhalb eines Gerätes besitzt.

13. Objektträger gemäß Anspruch 1, bei dem die dem Kapillarspalt zugewandte Seite der Deckfolie (7) mit einem Farbstoff versehen ist, der sich in flüssigen Proben zumindest teilweise löst.

14. Objektträger gemäß Anspruch 1, der neben den zwei Abstandshaltern (4) der mindestens einen Auswertekammer eine verkleinerte Auswerteebene (13) besitzt, die jedoch nicht zur Messung verwendet wird.

15. Objektträger gemäß Anspruch 14, bei dem die Breite der verkleinerten Auswerteebene (13) 30 bis 70 % einer Auswerteebene (3) beträgt.

16. Objektträger gemäß Anspruch 14 oder 15, bei dem die verkleinerte Auswerteebene (13) nur auf einer Seite eine Rinne (11) besitzt.

17. Verfahren zur Fertigung eines Objektträgers aus
- einem Grundkörper mit mindestens einer Auswertekammer und mindestens zwei Abstandshaltern (4) und
- einer Deckfolie (7)
dadurch gekennzeichnet, daß die Deckfolie auf die mindestens zwei Abstandshalter aufgedrückt wird, deren Kanten, die mit der Deckfolie verbunden werden, spitz zulaufen und Grundkörper und Deckfolie durch Ultraschall miteinander verschweißt werden.

18. Verwendung eines Objektträgers gemäß Anspruch 1 zur mikroskopischen Untersuchung einer flüssigen Probe.

## Claims

1. Slide (1) for the microscopic evaluation of liquid specimens comprising
- a base plate with at least one evaluation chamber and at least two spacers (4),
- wherein the at least one evaluation chamber has an evaluation plane (3) and one edge of this plane adjoins a specimen application zone (2) which is inclined relative to the evaluation plane (3) and
- said at least two spacers (4) are located on opposite edges of the area formed by the evaluation plane (3) and the specimen application zone (2),
- characterized by a cover foil (7) which is permanently joined to the spacers (4) in such a way that the cover foil (7) is arranged parallel to the evaluation plane (3) of the at least one evaluation chamber and a capillary gap is formed between the cover foil (7) and the evaluation plane (4),
wherein the edges of the spacers (4) which are joined to the cover foil (7) are tapered.

2. Slide as claimed in claim 1, in which the edge of the spacers (4) that face away from the cover foil (7) have coupling surfaces (10) which are accessible from the underside of the base plate and which can be used to couple ultrasound to the spacers (4).

3. Slide as claimed in one of the claims 1 or 2, in which the base plate and cover foil (7) are joined together by ultrasonic welding.

4. Slide as claimed in claim 1, wherein holes (12) are located in the base plate outside the at least one evaluation chamber so that the cover foil (7) can be held with respect to the base plate by inserting tools into these holes (12) during the process of bonding the base plate and cover foil (7).

5. Slide as claimed in claim 1, wherein a V-shaped groove (11) is located between the evaluation plane (3) and the at least two spacers (4).

6. Slide as claimed in claim 1, wherein the specimen application zone (2) is curved and the line of intersection of the evaluation plane (3) and specimen application zone (2) is located below the cover foil (7).

7. Slide as claimed in claim 1, wherein the capillary gap is open at the end of the capillary gap that faces away from the specimen application zone (2).

8. Slide as claimed in claim 7, in which a reservoir (6) adjoins said opening of the capillary gap.

9. Slide as claimed in claim 1, in which the capillary gap has a thickness of 30 to 120 µm, preferably of 60 to 90 µm.

10. Slide as claimed in claim 1, in which the cover foil (7) has a thickness of less than 0.2 mm.

11. Slide as claimed in claim 1, in which the capillary gap is longer than 1 cm.

12. Slide as claimed in claim 1, which has a gear rack (8) for moving the slide within a device.

13. Slide as claimed in claim 1, in which the side of the cover foil (7) facing the capillary gap is provided with a dye which at least partially dissolves in liquid specimens.

14. Slide as claimed in claim 1, which has an evaluation plane located next to the two spacers (4) of the at least one evaluation chamber that is reduced in size (13) and which is not used for measurement.

15. Slide as claimed in claim 14, in which the width of the reduced evaluation plane (13) is 30 to 70 % of an evaluation plane (3).

16. Slide as claimed in claim 14 or 15 in which the reduced evaluation plane (13) has a groove (11) on only one side.

17. Process for manufacturing a slide comprising
- a base plate with at least one evaluation chamber and at least two spacers (4) and
- a cover foil (7),
wherein the cover foil is pressed onto the at least two spacers whose edges that are to be joined to the cover foil are tapered and the base plate and cover foil are welded together by ultrasound.

18. Use of a slide as claimed in claim 1 for the microscopic evaluation of a liquid specimen.

## Revendications

1. Porte-objet (1) pour l'analyse microscopique de prélèvements liquides, contenant
- une plaque de base avec au moins une chambre d'analyse et au moins deux entretoises (4),
dans lequel ladite au moins une chambre d'analyse possède un plan d'analyse (3) et une surface de réception d'échantillon (2) est contiguë à un bord de ce plan, laquelle est inclinée par rapport au plan d'analyse (3) et
lesdites au moins deux entretoises (4) sont disposées au niveau des bords se trouvant au-dessus de la surface formée par le plan d'analyse (3) et la surface de réception d'échantillon (2),
- caractérisé par une feuille de recouvrement (7), qui est liée fermement aux entretoises (4), de sorte que la feuille de recouvrement (7) est disposée parallèlement au plan d'analyse (3) de ladite au moins une chambre d'analyse et une colonne capillaire est formée entre la feuille de recouvrement (7) et le plan d'analyse (4),
dans lequel les bords des entretoises (4) qui sont liés à la feuille de recouvrement (7) se prolongent de façon effilée.

2. Porte-objet selon la revendication 1, dans lequel le bord tourné vers la feuille de recouvrement (7) des entretoises (4) possède une surface de couplage (10), qui est accessible depuis le dessous de la plaque de base et par l'intermédiare de laquelle peut se réaliser un couplage d'ultrasons aux entretoises (4).

3. Porte-objet selon la revendication 1 ou 2, dans lequel la plaque de base et la feuille de recouvrement (7) sont liées au moyen d'un soudage par ultrasons.

4. Porte-objet selon la revendication 1, dans lequel des alésages (12) se trouvent dans la plaque de base à l'extérieur de ladite au moins une chambre d'analyse, de sorte que pendant le déroulement du raccordement du corps de base et de la feuille de recouvrement (7), la feuille de recouvrement (7) peut être maintenue par l'introduction d'outils dans ces alésages (12).

5. Porte-objet selon la revendication 1, dans lequel une rainure en forme de V (11) se trouve chaque fois entre le plan d'analyse (3) et lesdites au moins deux entretoises (4).

6. Porte-objet selon la revendication 1, dans lequel la surface de réception d'échantillon (2) est fléchie et la ligne de raccordement du plan d'analyse (3) et la surface de réception de prélèvement (2) se trouvent sous la feuille de recouvrement (7).

7. Porte-objet selon la revendication 1, dans lequel la colonne capillaire est ouverte au niveau de l'extrémité tournée vers la surface de réception de prélèvement (2) de la colonne capillaire.

8. Porte-objet selon la revendication 7, dans lequel un réservoir (6) est contigu à l'ouverture citée de la colonne capillaire.

9. Porte-objet selon la revendication 1, dans lequel la colonne capillaire possède une épaisseur de 30 à 120 µm, de préférence de 60 à 90 µm.

10. Porte-objet selon la revendication 1, dans lequel la feuille de recouvrement (7) possède une épaisseur inférieure à 0,2 mm.

11. Porte-objet selon la revendication 1, dans lequel la colonne capillaire est plus longue que 1 cm.

12. Porte-objet selon la revendication 1, qui possède une cremaillère (8) pour déplacer le porte-objet à l'intérieur d'un appareil.

13. Porte-objet selon la revendication 1, dans lequel a face tournée vers la colonne capillaire de la feuille de recouvrement (7) est munie d'un colorant, qui se dissout au moins partiellement dans les prélèvements liquides.

14. Porte-objet selon la revendication 1, qui en plus des deux entretoises (4) de ladite au moins une chambre d'analyse, possède un plan d'analyse réduit (13) qui pourtant n'est pas utilisé pour la mesure.

15. Porte-objet selon la revendication 14 dans lequel la largeur du plan d'analyse réduit (13) vaut de 30 à 70% de celle d'un plan d'analyse (3).

16. Porte-objet selon la revendication 14 ou 15, dans lequel le plan d'analyse réduit (13) ne possède une rainure (11) que d'un côté.

17. Procédé pour la fabrication d'un porte-objet constitué
- d'un corps de base avec au moins une chambre d'analyse et au moins deux entretoises (4) et
- une feuille de recouvrement (7)
caractérisé en ce que la feuille de recouvrement qui est appliquée sur au moins les deux entretoises, dont les bords qui sont liés à la feuille de recouvrement se prolongent de manière effilée et le corps de base et la feuille de recouvrement sont soudés l'un à l'autre au moyen d'ultrasons.

18. Utilisation d'un porte-objet selon la revendication 1, pour l'examen microscopique d'un prélèvement liquide.
